# EUROPEAN PATENT APPLICATION

(11) **EP 1 498 820 A1**
(43) Date of publication of application: **19.01.2005**
(21) Application number: 03744991.5
(22) Date of filing: 11.03.2003
(51) Int. Cl.: G06F 13/00, G06F 17/60

(54) **INFORMATION DISTRIBUTION METHOD, SERVER, AND PROGRAM**

(30) Priority: 27.03.2002 JP 2002087972
(71) Applicant: Log Monsters Inc., Tokyo 100-0005 (JP); United Power Co., Ltd., Tokyo 153-0064 (JP)
(72) Inventor: OZAKI, Hiromune, Chiyoda-ku, Tokyo 100-0005 (JP)
(74) Representative: Müller-Boré & Partner Patentanwälte
(86) International application number: PCT/JP2003/002828
(87) International publication number: WO 2003/081442

(57) **Abstract**

A method for distributing information to multiple users by a server via a network, the method comprising the steps of: transmitting notice information to a destination e-mail address of a registered user whose user information, including a unique user ID and the destination e-mail address, has been stored, the notice information containing the user ID (Step S1); transmitting a designated Web page when the registered user clicks a banner area that is displayed on the user terminal by receiving the notice information (Step S2); transmitting the notice information to the e-mail address of an unregistered user that is specified by the registered user as a forwarding address when a request for forwarding the notice information is made by the registered user via the Web page, the notice information containing the user ID (Step S3); acquiring the user ID of the registered user and transmitting the Web page when the unregistered user clicks a banner area that is displayed on the user terminal by receiving the notice information (Step S4); issuing a new user ID that is associated with the user ID of the registered user when a request for registration is made by the unregistered user via the Web page (Step S5); and storing user information including the new user ID and the forwarding address (Step S6). This method promotes an increase in the number of registered users to whom information can be distributed, and thereby enables the efficient distribution of information.

## Description

### TECHNICAL FIELD

The present invention relates to a method, server and program for distributing information, and more particularly to a method, server and program for distributing information to multiple users via a network.

### BACKGROUND ART

With the proliferation of Internet use, an increasing amount of information is being distributed over computer networks. Electronic magazines, which provide information in various forms to multiple subscribed users via e-mail, are known as a means for distributing specific information to a large number of individuals.

For example, Japanese Unexamined Patent Publication No. 2001-350895 discloses a customer information collection system that uses the publishing of electronic magazines to provide information, and to serve as a marketing approach. In this system, an electronic magazine is issued and transmitted to a target subscriber together with a subscriber key that is specific to the subscriber. A log that is made when the subscriber accesses the electronic magazine can then be collected together with the subscriber key. The log of the subscriber's access is stored in association with the information of the subscriber, thus also allowing the investigation of tastes that are unique to the subscriber.

In the distribution of information that utilizes electronic magazines, etc., such as that described above, it is preferred that information be viewed by as many users as possible who may help to achieve the purpose of distributing the information. Suppose that information were sent indiscriminately to unregistered users. Then, it would often happen that such information would not please the tastes or preferences of the users, which would not only fail to achieve the efficient distribution of the information, but would also annoy the users, thus potentially leading to an inadvertent, negative effect.

In order to prevent the above problem, it is necessary to provide an environment that will allow a large number of users to register who have an attribute that is relevant to the information to be distributed. Since registration is generally performed at the discretion of a user who has accessed a Web page or the like, one might logically seek to promote the awareness of a specific electronic magazine to thereby increase the number of subscribed users.

However, there is a problem in that information providers cannot easily identify potential target users and, therefore, fail, in many cases, to obtain satisfactory results from their promotion or advertising efforts, thus making it difficult to increase the number of registered users.

### DISCLOSURE OF THE INVENTION

The present invention was conceived in an attempt to solve the above-mentioned problem. It is an object of the invention to provide a method, server and program for distributing information, all of which increase the number of registered users to whom information can be distributed, and thereby enable the efficient distribution of information.

The above object of the present invention is accomplished by a method for distributing information to multiple users by a server via a network, the method comprising the steps of: transmitting notice information to the destination e-mail address of a registered user whose user information, including a unique user ID and the destination e-mail address, has been stored, the notice information containing the user ID; acquiring the user ID of the registered user and transmitting a designated Web page when the registered user clicks a banner area that is displayed on the user terminal by receiving the notice information; transmitting the notice information to the e-mail address of an unregistered user that is specified by the registered user as a forwarding address when a request for forwarding the notice information is made by the registered user via the Web page, the notice information containing the user ID; acquiring the user ID of the registered user and transmitting the Web page when the unregistered user clicks a banner area that is displayed on the user terminal by receiving the notice information; issuing a new user ID that is associated with the user ID of the registered user when a request for registration is made by the unregistered user via the Web page; and storing user information including the new user ID and the forwarding address.

The above object of the present invention is also accomplished by a server for distributing information to multiple users via a network, the server comprising: a user information memory that stores user information including unique user IDs and destination e-mail addresses; a notice information memory that stores notice information to be sent to users; a notice information transmitter that transmits the notice information to users; a Web page transmitter that transmits a designated Web page in response to an access by a user; and a user information controller that controls multiple sets of the user information;
wherein the notice information transmitter transmits the notice information to the destination e-mail address of a registered user, the notice information containing the user ID; when the registered user clicks a banner area that is displayed on the user terminal by receiving the notice information, the Web page transmitter acquires the user ID of the registered user and transmits the Web page; when a request for forwarding the notice information is made by the registered user via the Web page, the notice information transmitter transmits the notice information to the e-mail address of an unregistered user that is specified by the registered user as a forwarding address, the notice information containing the user ID; when the unregistered user clicks a banner area that is displayed on the user terminal by receiving the notice information, the Web page transmitter acquires the user ID of the registered user and transmits the Web page; and when a request for registration is made by the unregistered user via the Web page, the user information controller issues a new user ID that is associated with the user ID of the registered user, and stores user information including the new user ID and the forwarding address.

The above object of the present invention is further accomplished by an information distribution program that allows a server to execute the above-described information distribution method.

### BRIEF DESCRIPTION OF THE DRAWINGS

Fig. 1 is a block diagram of an information distribution server according to one embodiment of the present invention.
Fig. 2 is a flow chart describing the operational procedure for the information distribution server.
Fig. 3 is an illustration showing an example of an e-mail reception page for registered users.
Fig. 4 is an illustration showing an example of a portal page.
Fig. 5 is an illustration showing an example of a message entry page.
Fig. 6 is an illustration showing an example of an e-mail address entry page.
Fig. 7 is an illustration showing an example of a confirmation page.
Fig. 8 is an illustration showing an example of an e-mail reception page for unregistered users.
Fig. 9 is an illustration showing an example of a user information entry page.
Fig. 10 is a schematic diagram showing an example of the hierarchical structure of user IDs.
Fig. 11 is a schematic view of an allocation table.
Fig. 12 is a flow chart showing another operational procedure for the information distribution server.

### BEST MODE FOR CARRYING OUT THE INVENTION

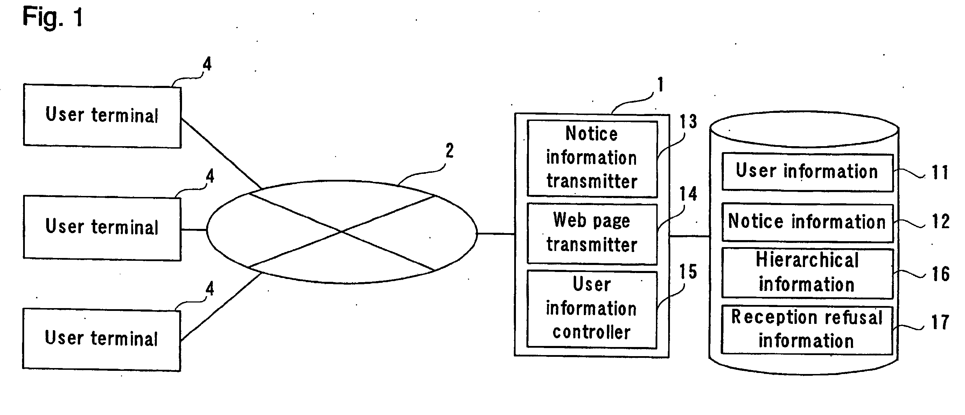

One embodiment of the present invention will be described below with reference to the accompanying drawings. Fig. 1 is a block diagram of an information distribution server according to one embodiment of the present invention. As illustrated in Fig. 1, the information distribution server 1 is connected to a plurality of user terminals 4 via a network 2. The user terminals 4 store therein software components such as a Web browser for accessing the Web pages that are available in the Information distribution server 1 and a mailer for sending and receiving e-mail, and can be, for example, cellular phones or personal computers.

The information distribution server 1 is a Web server, and comprises a user information memory 11, a notice information memory 12, a notice information transmitter 13, a Web page transmitter 14, a user information controller 15, a hierarchical information memory 16, and a reception refusal information memory 17.

The user information memory 11 stores user information for each user who is registered as a subscriber to an electronic magazine. This user information includes the user ID and destination e-mail address (destination address) of a registered user, as well as, for example, the age, sex, and occupation of the user. The user information further includes the service points assigned to each registered user.

The notice information memory 12 stores the notice information to be distributed to registered users as an electronic magazine. The notice information includes various information, such as newly arrived information or advertisement information, as well as the URLs (Uniform Resource Locators) of target Web pages, etc.

The notice information transmitter 13 transmits the notice information stored in the notice information memory 12 to each of the user terminals 4 based on the destination addresses of the registered users stored in the user information memory 11. In a case where multiple types of notice information exist, the information of the appropriate type is transmitted to the users who have registered specifically for that type.

The Web page transmitter 14 transmits a designated Web page stored in the information distribution server 1 in response to an access by the user terminal 4.

The user information controller 15 performs such tasks as allowing the user information for newly registered users to be stored in the user information memory 11, and associating the user IDs included in the user information with each other.

The hierarchical information memory 16 stores information by which to associate the user IDs with each other, an allocation table for allocating service points to each user, etc.

The reception refusal information memory 17 stores the e-mail addresses of users who have sent a notice to the effect that they do not wish to receive an electronic magazine.

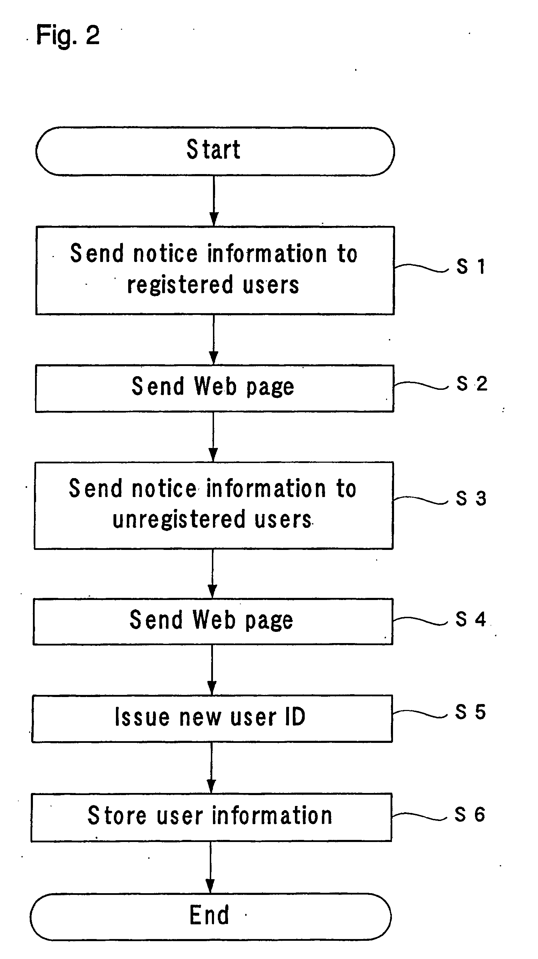

The operation of the information distribution server 1 mentioned above will now be described by referring to the flow chart shown in Fig. 2. An information provider first determines one or more users who are to be the first subscribers to an electronic magazine, and then enters the user information for such users, including their user IDs and destination addresses. This user information is then stored in the user information memory 11. The position in which the registered users are placed is hereinafter referred to as the "starting position". The user IDs of the users to be placed at the starting position may be issued either automatically or manually by the operator of the server.

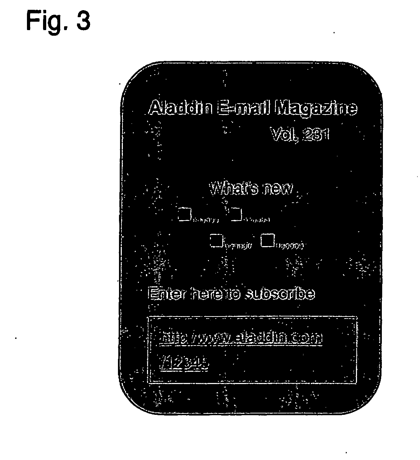

The notice information transmitter 13 transmits, via e-mail, notice information on a periodical basis to each of the destination addresses that are stored in the user information memory 11 as user information (Step S1). The registered users, to which notice information can be sent, are each given a unique user ID. The notice information transmitter 13 attaches a user ID to the address of a destination Web page, and then sends the notice information including the above user ID to the corresponding destination address. Upon receiving this e-mail at the user terminal 4, an e-mail reception page for registered users is displayed as shown in Fig. 3.

In this e-mail reception page for registered users, newly arrived information, etc., is displayed, as well as a banner area that, for example, contains a target URL (e.g., http://www.aladdin.com/) and a user ID (e.g., 12345) attached to the URL as query data. If a user clicks this banner area, a request is submitted to the information distribution server 1 to transmit the Web page specified by the URL.

The banner area may not necessarily appear as described above, and may, for example, include only a text message that says "click here", or may appear as an image, such as a GIF or JPEG image, so that a user would not visually identify the target URL or user ID. Furthermore, a link is not necessarily required; a user may manually enter the displayed URL to access a Web page. In either of the above cases, the information distribution server 1 may, when a user has accessed a Web page, acquire the user ID of the user, thus identifying which one of the registered users has accessed the Web page. The form of user ID is not specifically restricted as long as each ID is unique. For example, a user ID may be a combination of numerical characters, or the e-mail address of a user.

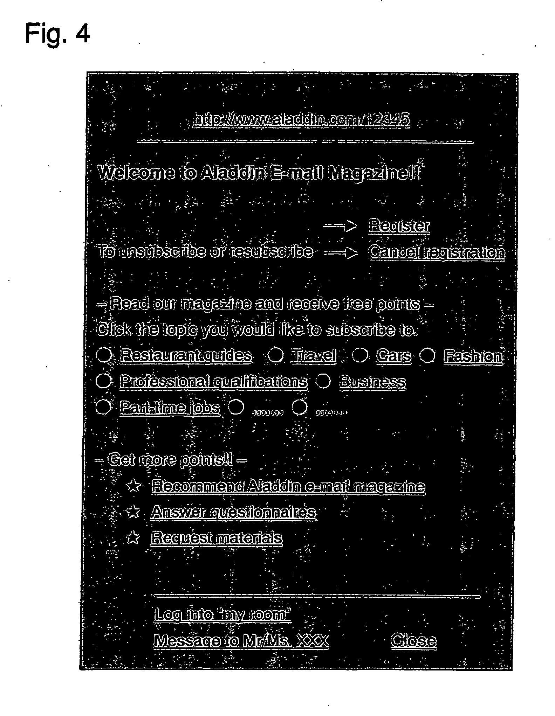

When a registered user attempts to access a Web page, the Web page transmitter 14 transmits the Web page for the specified URL to the user terminal 4 (Step S2), as a result of which a portal page as shown in Fig. 4 is displayed on the user terminal 4.

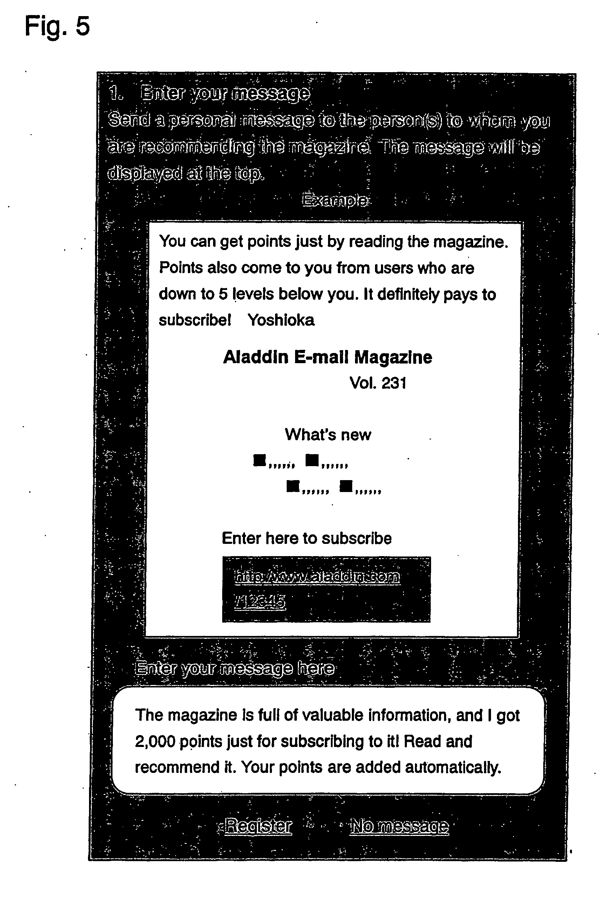

This portal page has links provided therein. For example, these links may be arranged by topic (such as restaurant guides, travel, cars, fashions, qualifications, business, and part-time jobs) among which a user may choose by clicking the one that he/she is interested in to view the detailed information thereon. This portal page also includes a link with which a user may forward the notice information received via e-mail to his/her acquaintances. Upon clicking the part that reads "Recommend the e-mail magazine" in this portal page, a message entry page as shown in Fig. 5 is displayed on the user terminal 4.

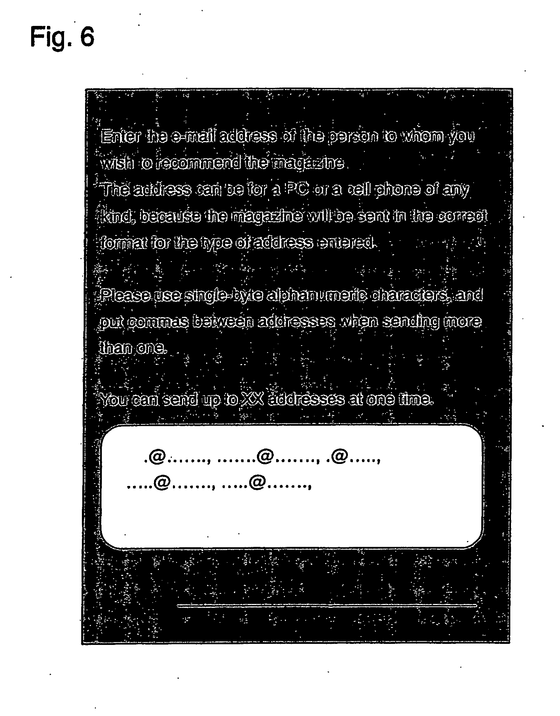

This message entry page allows a registered user to enter a message for the recipient at the forwarding destination. If a registered user enters a message and clicks the part that says "Register" in this message entry page, an e-mail address entry page is displayed in which the user may then enter the e-mail address of the forwarding destination (forwarding address), as shown in Fig. 6. This e-mail address entry page may also be reached by clicking the part that says "No message" in the message entry page, without entering a message.

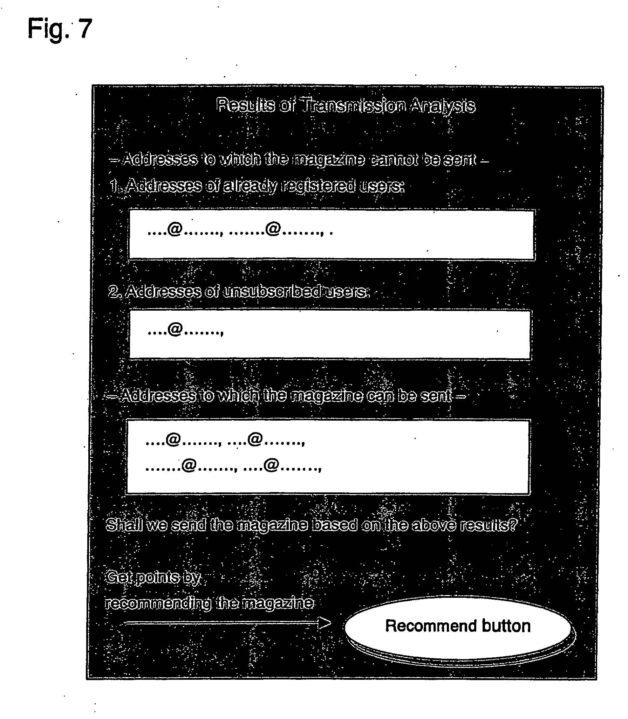

If a registered user enters one or more forwarding addresses and then clicks the part saying "Send" in the e-mail address entry page of Fig. 6, the user information controller 15 checks the entered forwarding addresses as to whether or not they are stored in the user information memory 11 or the reception refusal information memory 17. If any of the entered addresses is found to be stored in the user information memory 11, it means that the user having that address is already registered, whereas if any of the entered addresses is found to be stored in the reception refusal information memory 17, it means that the user having that address has unsubscribed from the service. Hence, in either case, the user information controller 15 regards such an address as one to which notice information cannot be sent. On the contrary, if it is found that the entered addresses are stored in neither the user information memory 11 nor the reception refusal information memory 17, the user information controller 15 regards such addresses as ones to which notice information can be sent. The e-mail addresses as thus classified are displayed in a confirmation page on the user terminal 4 as shown in Fig. 7. The user may then click the "Recommend button" in this confirmation page to complete the request to the information distribution server 1 for forwarding notice information. The results of analysis as to whether to send notice information may not necessarily be displayed, thus omitting the confirmation page of Fig. 7.

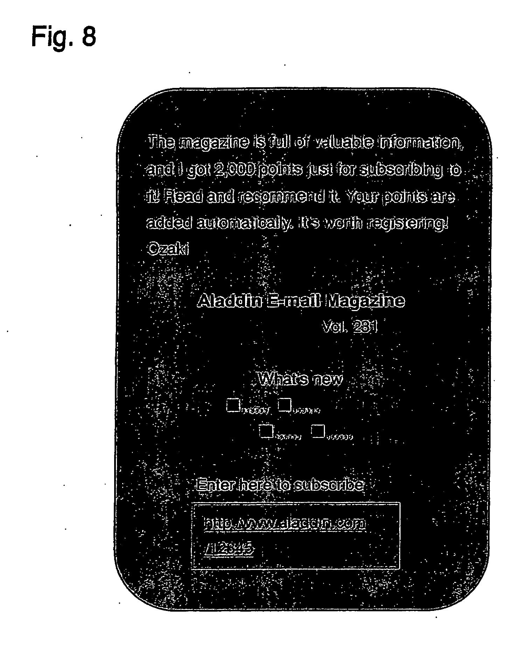

In response to this request for forwarding notice information, the notice information transmitter 13 transmits, via e-mail, the notice information in which the user ID of the introducer is included to the forwarding addresses that were regarded as ones to which notice information could be sent (Step S3). This notice information includes the message that was entered by the introducer in the message entry page of Fig. 5. Upon receiving the e-mail at the user terminal 4, an e-mail reception page for unregistered users is displayed as shown in Fig. 8.

In the e-mail reception page for unregistered users, the name of the introducer and possibly the message sent from him/her are displayed in addition to the information that was displayed in the e-mail reception page for registered users of Fig. 3, thereby providing security to the e-mail receivers, and promoting them to access a Web page.

When an unregistered user attempts to access a Web page, the Web page transmitter 14 transmits the Web page for the specified URL to the user terminal 4 (Step S4). A portal page of the user terminal 4 is then displayed which is the same as that which would be displayed when accessed by a registered user (cf. Fig.4).

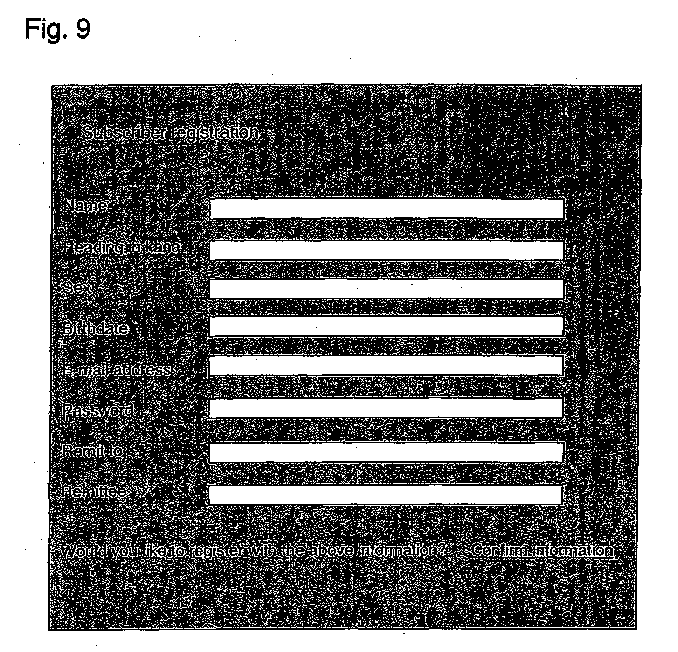

This portal page incorporates a link provided therein that allows an unregistered user to register. Upon clicking the part that reads "Register" in this portal page, a user information entry page as shown in Fig. 9 is displayed. In the user information entry page, an unregistered user may enter his/her name, sex, birthdate, e-mail address, password, etc., and then click the "Confirm" button to request his/her registration to the information distribution server 1. This registration procedure may also be designed such that an unregistered user is asked to agree with, for example, a privacy policy or membership regulations.

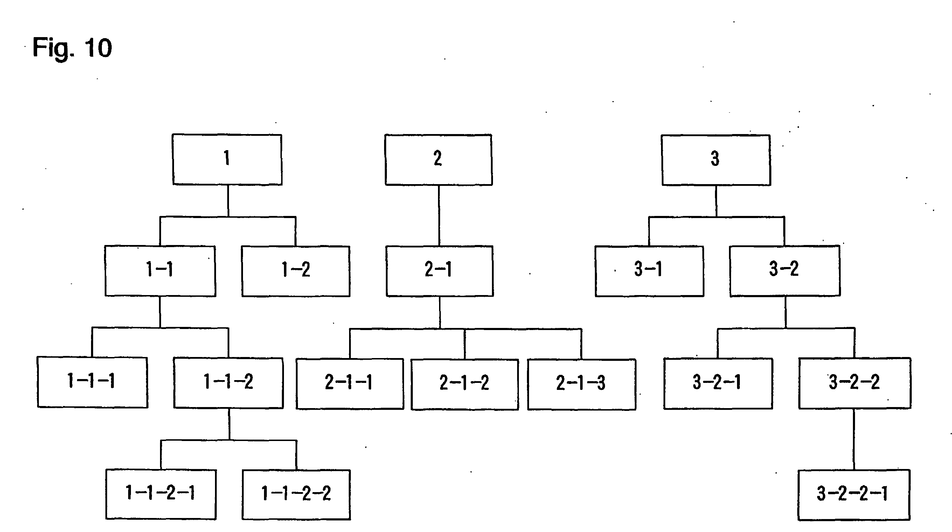

Upon receiving a registration request from an unregistered user, the user information controller 15 issues a new user ID that is correlated with the user ID of the registered user who introduced the unregistered user (Step S5). User IDs may be correlated with each other by, for example, storing the information that identifies the user ID to which the new user ID is subordinate in the hierarchical information memory 16 whenever a new user ID is issued. User IDs may also be issued such that a new user ID is created by combining with the user ID of the introducer a serial number that is subordinate thereto as an additive code, thus allowing the new user ID to be definite in terms of its subordination, as can be seen from Fig. 10. Referring to Fig. 10, suppose the user ID of an introducer is "1" and the additive code is "1". The new user ID is then "1-1". As another example, suppose the user ID of an introducer is "2-1" and the additive code is "3". The new user ID is then "2-1-3". Unique user IDs may be assigned by following this pattern.

The user information controller 15 incorporates a new user ID thus issued into the user information that was entered during a registration procedure, and stores it in the user information memory 11 (Step S6). An electronic magazine will be sent to the newly registered user via e-mail starting with the next issue.

It may happen, depending on the situation, that an unregistered user is not motivated to subscribe to an electronic magazine after viewing the e-mail reception page for unregistered users that was sent from his/her introducer (ref. Fig. 8). In this case, the unregistered user may click the part that says "Unsubscribe" in the portal page (ref. Fig. 4) to display a page for unsubscribing. The information entered in this page, such as the e-mail address of the unregistered user, is stored in the reception refusal information memory 17. As a result, even if another registered user attempts to introduce this unregistered user, the user information controller 15 determines this unregistered user to be one to which notice information cannot be forwarded, thus eliminating the possibility of repeatedly transmitting an electronic magazine to a user who does not wish to receive one.

A method for assigning service points is described next as an example of utilizing the correlated user IDs. When a user has registered, a designated number of service points are allocated to the user, as well as to his/her introducer, etc., based on the allocation table stored in the hierarchical information memory 16. These service points are stored in the user information memory 11.

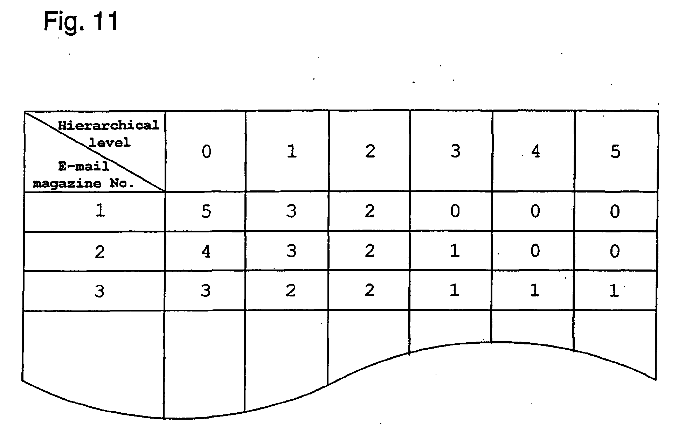

As can be seen from Fig. 11, the allocation table designates, for each electronic magazine, the relationship between the ratio (%) of the service points to be assigned to each registered user and the hierarchical level. As used herein, the "hierarchical level" indicates the hierarchical distance between a newly registered user and' an already registered user. An example of this is given below with the assumption that user IDs are assigned on a hierarchical basis, as shown in Fig. 10. When the user ID of a newly registered user is "2-1-3", 5% of the new registration points are added as service points to this user, who has the hierarchical level 0, based on the allocation table. Further, 3% of the new registration points are added as service points to the user with the hierarchical level 1, i.e., the user with the user ID of "2-1", who has introduced the above user. Similarly, 2% of the new registration points are added as service points to the user with the hierarchical level 2, i.e., the user with the user ID of "2", who is two levels higher.

Service points are also allocated in response to user operations such as, in addition to new registration, viewing information, completing questionnaires, and requesting materials, all of which can be performed through the portal page (Fig. 4). For example, when a designated topic is clicked in the portal page, detailed information about the topic is displayed. By clicking the "Read it-button" that is provided at the end of this information, a designated number of service points are allocated to the user who has viewed the information, as well as to the users who are hierarchically above this user, as with the case of allocating new registration points, which was described earlier.

Depending on the total number of service points added as described above, compensation is paid to a user at designated periods or upon receipt of the designated number of service points. The compensation to be paid to each user may be charged, for example, to the provider or advertiser of the information posted on the electronic magazine.

In this way, service points are allocated not only to a newly registered user, but also to the introducer of the newly registered user, thus encouraging unregistered users to register, and further motivating already registered users to solicit other users. Furthermore, since service points are also allocated to the registered users who are hierarchically higher than an introducer, such users may be provided with substantial revenue through routes that they are not even aware of, thus also providing a game-like enjoyment. These merits, accordingly, may serve to encourage people to register with a published electronic magazine, thereby rapidly increasing the number of registered users, and ultimately ensuring the effective distribution of information.

In the case where the registered users who should be allocated service points no longer exist, for example where the starting position is at the hierarchical level 0, the service points that would normally be added to such non-existing users may all be given to the registered users located at the starting position, which is the topmost level of the hierarchical structure.

When a registered user asks to unsubscribe from an electronic magazine, the user ID of the registered user is deleted. When a deleted user ID is found in a position to which service points would otherwise be allocated, the service points are allocated to the user IDs that are hierarchically above the deleted user ID. For example, when the user ID "2-1-3" is deleted, the service points that would normally have been allocated to the user with this ID are allocated to the user with the user ID of "2-1", who is one level above him/her, and the service points that would normally have been allocated to the user with the user ID of "2-1" are allocated to the user with the user ID of "2", who is one level above him/her.

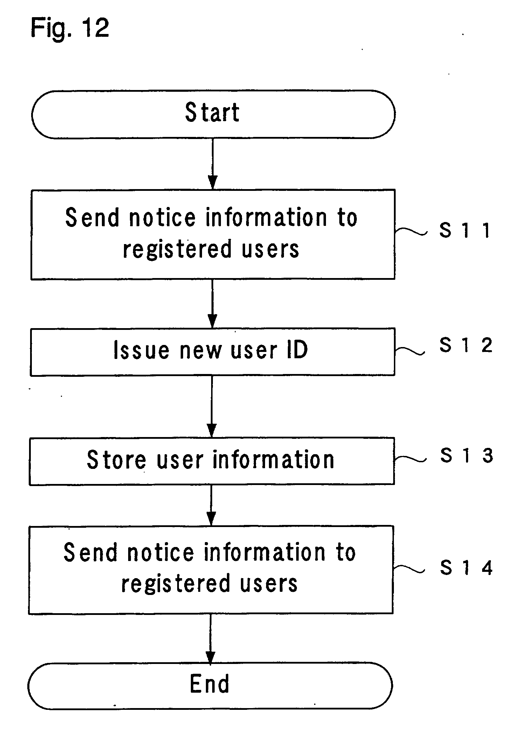

Although one embodiment of the present invention has been described, the same effect as that of the described embodiment may be provided without displaying a portal page (ref. Fig. 4) on the user terminals 4 but by following the procedure that will be described below with reference to the flow chart shown in Fig. 12. Brief descriptions will be provided for the aspects of the procedure that overlap with the above-described embodiment.

The notice information transmitter 13 transmits, via e-mail, notice information on a periodical basis to each of the destination addresses stored in the user information memory 11 as user information (Step S11). This e-mail includes the user ID of a registered user.

Upon receiving this e-mail, a registered user, in response, enters the e-mail address of one or more users at a forwarding destination (forwarding addresses), together with his/her comment, if any.

Once the user information controller 15 has received this response mail from the registered user, it then searches inside the user information memory 11 and the reception refusal information memory 17 in order to determine whether the entered addresses are ones to which notice information can be sent, and then issues new user IDs for those determined to be ones to which notice information can be sent (Step S12). These new user IDs are associated with the user ID of the introducer.

The user information controller 15 further associates the newly issued user IDs with the forwarding addresses, and then stores them in the user information memory 11 (Step S13), which completes the registration procedure.

Subsequently, the notice information transmitter 13 transmits notice information to the forwarding addresses (Step S14). This transmission may also be performed prior to issuing new user IDs.

As described above, a newly registered user introduces other users in a successive way, thus rapidly increasing the number of registered users and, as a result, enabling more effective distribution of information.

If a user who has received e-mail through the recommendation of a registered user does not wish to receive upcoming electronic magazine articles, he/she may send an e-mail message to the information distribution server 1 to unsubscribe, so that the e-mail address of this user will be stored in the reception refusal information memory 17, thus preventing a user with no intention of subscribing to an electronic magazine from being annoyed by repeatedly receiving the electronic magazine.

Although one embodiment of the present invention has been described, the means for transmitting notice information to the user terminals 4 may not necessarily be e-mail, and may be selected from other options as long as the transmission of information to users is assured. Furthermore, although an electronic magazine is exemplified in each of the above embodiments, other means may also be employed to transmit information to a large number of users.

It is also possible to create a program for the operating procedure followed in the above embodiment, thus allowing it to be distributed in the marketplace.

### INDUSTRIAL APPLICABILITY

The present invention promotes an increase in the number of registered users to whom information can be distributed, and thereby enables the efficient distribution of information.

## Claims

1. A method for distributing information to multiple users by a server via a network, the method comprising the steps of:
transmitting notice information to a destination e-mail address of a registered user whose user information, including a unique user ID and the destination e-mail address, has been stored, the notice information containing the user ID;
acquiring the user ID of the registered user and transmitting a designated Web page when the registered user clicks a banner area that is displayed on the user terminal by receiving the notice information;
transmitting the notice information to the e-mail address of an unregistered user that is specified by the registered user as a forwarding address when a request for forwarding the notice information is made by the registered user via the Web page, the notice information containing the user ID;
acquiring the user ID of the registered user and transmitting the Web page when the unregistered user clicks a banner area that is displayed on the user terminal by receiving the notice information;
issuing a new user ID that is associated with the user ID of the registered user when a request for registration is made by the unregistered user via the Web page; and
storing user information including the new user ID and the forwarding address.

2. A method for distributing information according to claim 1, wherein the notice information transmitted by the server to the registered or unregistered user contains information indicating the location of the Web page and being accompanied by the user ID.

3. A method for distributing information according to claim 1, wherein the notice information transmitted by the server to the forwarding address includes comment data received from the registered user.

4. A method for distributing information according to claim 1, wherein the notice information is transmitted by the server to address(es) selected from multiple forwarding addresses specified by the registered user by eliminating those stored as ones to which notice information cannot be sent.

5. A method for distributing information according to claim 1, wherein the e-mail addresses to which notice information cannot be sent include the e-mail addresses of unregistered users who have sent a notice to the effect that they do not wish to receive the notice information.

6. A method for distributing information according to claim 1, wherein the notice information is transmitted via e-mail.

7. A server for distributing information to multiple users via a network, the server comprising:
a user information memory that stores user information including unique user IDs and destination e-mail addresses;
a notice information memory that stores notice information to be sent to users;
a notice information transmitter that transmits the notice information to users;
a Web page transmitter that transmits a designated Web page in response to an access by a user; and
a user information controller that controls multiple sets of the user information;
wherein:
the notice information transmitter transmits the notice information to the destination e-mail address of a registered user, the notice information containing the user ID;
when the registered user clicks a banner area that is displayed on the user terminal by receiving the notice information, the Web page transmitter acquires the user ID of the registered user and transmits the Web page;
when a request for forwarding the notice information is made by the registered user via the Web page, the notice information transmitter transmits the notice information to the e-mail address of an unregistered user that is specified by the registered user as a forwarding address, the notice information containing the user ID;
when the unregistered user clicks a banner area that is displayed on the user terminal by receiving the notice information, the Web page transmitter acquires the user ID of the registered user and transmits the Web page; and
when a request for registration is made by the unregistered user via the Web page, the user information controller issues a new user ID that is associated with the user ID of the registered user, and stores user information including the new user ID and the forwarding address.

8. An information distribution program that allows a server to execute the information distribution method of claim 1.
